# EUROPEAN PATENT APPLICATION

(11) **EP 3 703 380 A1**
(43) Date of publication of application: **02.09.2020**
(21) Application number: 19159654.3
(22) Date of filing: 27.02.2019
(51) Int. Cl.: H04N 21/41, H04N 21/422

(54) **REMOTE CONTROL DEVICE AND METHOD OF OPERATING A REMOTE CONTROL DEVICE**

(71) Applicant: Vestel Elektronik Sanayi ve Ticaret A.S., 45030 Manisa (TR)
(72) Inventor: ÖCAL,, Ömür, 45030 Manisa (TR); SARIARSLAN,, Muhammet Kürsat, 45030 Manisa (TR)
(74) Representative: Flint, Adam

(57) **Abstract**

A remote control device (200) has a plurality of buttons (201) for causing control signals to be sent to a media playback device (100) to modify playback settings of the media playback device (100). At least one of the buttons (201a) is illuminated to prompt a user (300) of the remote control device (200) to operate that button (201a) in order to change a corresponding playback setting on the media playback device (100).

## Description

### Technical Field

The present disclosure relates to a remote control device and a method of operating a remote control device.

### Background

The term "media playback device" refers to an electronic device for playing back media content, including for example films/movies, music, television or radio broadcasts, etc. Examples of media playback devices include television sets, mobile or "smart" phones, tablet computers and other computers generally, radios, etc.

Various playback settings of the media playback device determine physical properties of the video and audio portions as played back to a user. For example, a volume setting of the media playback device affects the loudness of the audio portion of the media content as output by the speaker. The playback settings therefore also affect how the user perceives the video and audio portions. The user may select or alter the playback settings of the media playback device using a remote control device by, for example, pressing one or more buttons of the remote control device.

### Summary

According to a first aspect disclosed herein, there is provided a method of operating a remote control device for controlling a media playback device, the remote control device comprising a plurality of buttons for causing control signals to be sent by the remote control device to the media playback device to modify playback settings of the media playback device, the method comprising: illuminating at least one of the buttons, said at least one button being for causing a control signal to be sent by the remote control device to the media playback device to modify a playback setting, thereby to prompt a user of the remote control device to operate said at least one button to change the playback setting on the media playback device.

The method may comprise identifying a playback setting of the media playback device to be changed.

The playback setting may be one of: volume, brightness, contrast, gamma, aspect ratio, colour level, backlight control, an equaliser setting, etc.

In an example, the method comprises identifying the playback setting to be changed by receiving from the media playback device an indication of the playback setting to be changed.

In an example, the method comprises identifying the playback setting to be changed by: receiving input from a sensor arrangement indicative of a current value of the playback setting; and identifying that the current value of the playback setting is to be changed.

The sensor arrangement, such as a microphone, brightness level detector, etc., may be provided as part of the remote control device or as a separate component.

In an example, the method comprise identifying the playback setting to be changed by: receiving from the media playback device a current value of the playback setting; and identifying that the current value of the playback setting is to be changed.

In an example, the method comprises identifying that the current value of the playback setting is to be changed by comparing the current value of the playback setting with a threshold value of the playback setting.

In an example, the method comprises identifying that the current value of the playback setting is to be changed by identifying that the current value of the playback setting is below the threshold value.

In an example, the method comprises identifying that the current value of the playback setting is to be changed by identifying that the current value of the playback setting is above the threshold value.

In an example, the method comprises illuminating at least one of the buttons by flashing said at least one of the buttons.

According to a second aspect disclosed herein, there is provided a remote control device for controlling a media playback device, the remote control device comprising: a plurality of buttons for causing control signals to be sent by the remote control device to the media playback device to modify playback settings of the media playback device; and a processor configured to illuminate at least one of the buttons, said at least one button being for causing a control signal to be sent by the remote control device to the media playback device to modify a playback setting, thereby to prompt a user of the remote control device to operate said at least one button to change the identified playback setting on the media playback device.

According to a third aspect disclosed herein, there is provided a method of operating a media playback device controllable by a remote control device comprising a plurality of buttons for causing control signals to be sent by the remote control device to the media playback device to modify playback settings of the media playback device, the method comprising: causing at least one of the buttons of the remote control device to illuminate, said at least one button being for causing a control signal to be sent by the remote control device to the media playback device to modify a playback setting, thereby to prompt a user of the remote control device to operate said at least one button to change the identified playback setting on the media playback device.

In an example, the method comprises identifying the playback setting to be changed and outputting an indication of the playback setting to be changed for reception by the remote control device.

In an example, the method comprises identifying the playback setting to be changed by comparing a current value of the playback setting with a threshold value of the playback setting.

In an example, the method comprises causing at least one of the buttons of the remote control device to illuminate by outputting an indication of a current value of the playback setting for reception by the remote control device.

According to a fourth aspect disclosed herein, there is provided a media playback device controllable by a remote control device comprising a plurality of buttons for causing control signals to be sent by the remote control device to the media playback device to modify playback settings of the media playback device, the media playback device comprising: a processor configured to cause at least one of the buttons of the remote control device to illuminate, said at least one button being for causing a control signal to be sent by the remote control device to the media playback device to modify a playback setting, and thereby prompt a user of the remote control device to operate said at least one button to change the identified playback setting on the media playback device.

### Brief Description of the Drawings

To assist understanding of the present disclosure and to show how embodiments may be put into effect, reference is made by way of example to the accompanying drawings in which:
Figure 1 shows schematically an example media playback device and a remote control device for operation by a user;
Figure 2 shows schematically a side view of an example remote control device having a button illuminated;
Figure 3 shows schematically a plan view of the example remote control device having a button illuminated; and
Figure 4 shows schematically a plan view of another example remote control device.

### Detailed Description

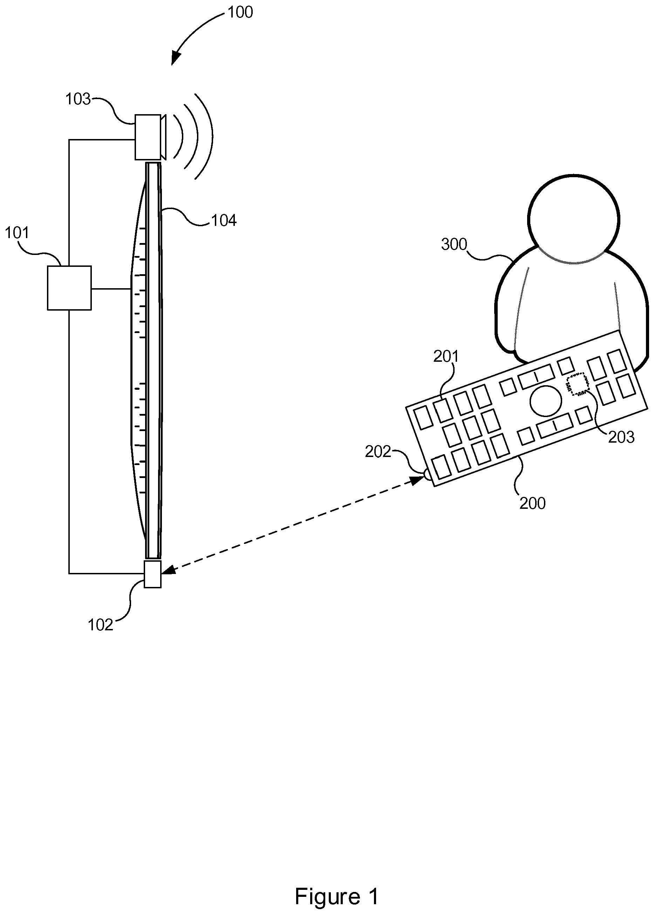

Figure 1 shows schematically an example media playback device 100 and a remote control device 200 for operation by a user 300. The media playback device 100 comprises a processor 101 and a communications interface 102. The processor 101 is operatively coupled to the communications interface 102 by, for example, a wired connection. The processor 101 is referred to as a media playback device processor 101 herein in order to distinguish it from a processor 203 of the remote control device 200 (described below).

The media playback device 100 may in general be, for example, a television set, a set-top box, a DVD player, a Blu Ray player, a personal computing device such as a laptop or desktop or tablet computer, a video game console, a cellular phone (including a so-called "smart phone"), a media player, etc.

The media playback device processor 101 is operatively coupled to one or more media content playback devices. Examples of media content playback devices include a speaker 103 for outputting audio and a display screen 104 for displaying video. The media content playback devices may be external to the media playback device 100 as is the case, for example, for set-top boxes, DVD or similar players, etc. The media content playback devices may be integral parts of the media playback device 100 itself as is the case, for example, for television sets, radios, media players, etc.

In any case, the media playback device 100 is configured to play back media content using the speaker 103 and/or display screen 104, whether provided separately or integrally. For example, if the media content comprises both a video portion and an audio portion, the media playback device 100 may be configured to output the video portion via the display screen 104 and the audio portion via the speaker 103.

The media playback device 100 is configured with various playback settings which affect playback properties of the media content during playback of the media content. For example, a volume setting of the media playback device 100 will affect the loudness of the audio portion output by the speaker 103. Other examples of playback settings of the media playback device 100 include brightness, contrast, gamma, aspect ratio, colour level and backlight control for display settings, an equaliser setting, bass, mid and treble settings, stereo or 5.1 or 7.1, etc. surround speaker balance, for audio settings, etc.

The remote control device 200 has a plurality of buttons 201, a communications interface 202, and a processor 203. The processor 203 is referred to as the remote control device processor 203 herein to distinguish it from the media playback device processor 101. The remote control device processor 203 is operatively coupled to each of the buttons 201 and to the communications interface 202.

The buttons 201 are for causing control signals to be sent by the remote control device 200 to the media playback device 100 to modify playback settings of the media playback device 100. That is, each button 201 is associated with a control command to be sent to the media playback device 100 for causing the media playback device 100 to change one or more of its playback settings. Pressing a button 201 causes the remote control device processor 203 to output a corresponding control command via the communications interface 202 for reception by the media playback device 100. The communications interface 102 of the media playback device 100 and the communications interface 202 of the remote control device 200 may use any suitable wireless technology, including for example infrared which is commonly used, radio, etc. Alternativity or additionally, there may be a wired connection between the media playback device 100 and the remote control device 200.

The media playback device 100 receives these control commands via its communications interface 102 and reacts to alter the media playback setting in accordance with the received control command. The plurality of buttons 201 can thereby be used by the user 300 to alter the playback settings of the media playback device 100. For example, the user 300 may press a "volume up" button on the remote control device 200 in order to increase the volume setting of the media playback device 200, and thereby cause the loudness of the audio portion output by the speaker 103 to increase, a "brightness up" or "contrast up" button on the remote control device 200 in order to increase the brightness or contrast of the displayed image, respectively, etc.

When the media playback device 100 is playing back media content, how the audio portion sounds to the user 300 and how the video portion looks to the user 300 depend inter alia on the current values of the playback settings of the media playback device 100. It may be the case that the current value of one of more of these playback settings is not optimal. Here "not optimal" means that a more appropriate value for that playback settings exists. This may be, for example, that the volume is set too high, the brightness is set too low, the aspect ratio of the video portion as being played back is not set to match the aspect ratio of the video portion of the original video content, etc. This is described in more detail below.

The user 300 may not be aware that the current value of one of more of the playback settings is not optimal. Furthermore, even when the user 300 is aware that a change to one or more of the playback settings should take place, the user 300 may not know how to enact this change using the remote control device 200 and/or may not easily find the relevant control button on the remote control device 200.

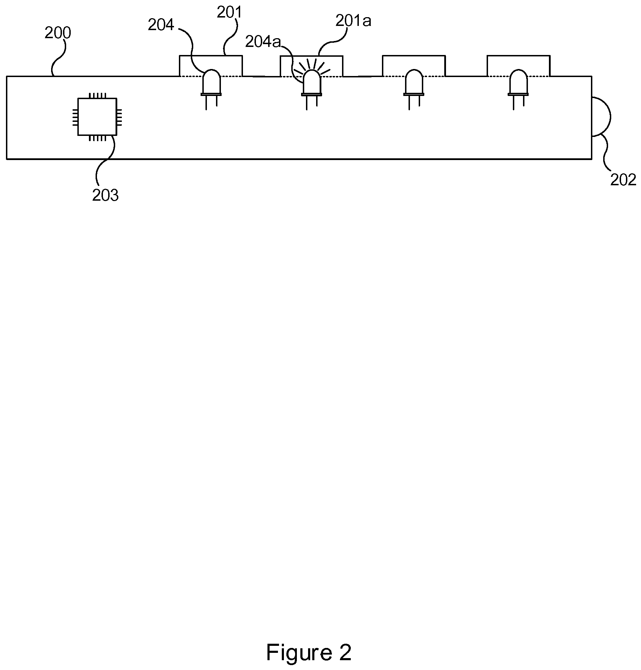

Figure 2 shows schematically a cross-sectional side view of the remote control device 200 in accordance with an example described herein. As described above in relation to Figure 1, the remote control device 200 comprises a plurality of buttons 201, a communications interface 202, and a remote control device processor 203. In this example, each button 201 is associated with a respective light source 204, such as for example a light emitting diode (LED). The buttons 201 may be physical buttons which have to be pressed to operate them and/or touchscreen buttons or the like.

The remote control device processor 203 is operatively coupled to each of the light sources 204 and can thereby control each light source 204 to illuminate when desired. Each button 201 allows at least some light to pass through. For example, the buttons 201 may be constructed of a transparent or translucent material. Examples of suitable materials include polycarbonate (PC), acrylic, polyethylene terephthalate (PET), etc. Non-plastic materials, e.g. glass, may also be used. The user 300 can therefore see light from a light source 204 as it has passed through the respective button 201. In Figure 2, one of the light sources 204a is active. A corresponding button 201a is therefore illuminated.

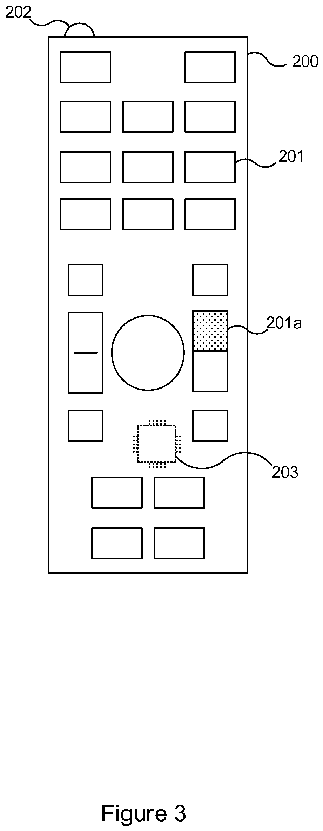

Figure 3 shows schematically a plan view of the remote control device 200 having button 201a illuminated as described above. Button 201a may be, for example, a volume up button. This illumination visually prompts the user 300 to press the volume up button 201a and thereby increase the volume setting of the media playback device 100.

In general, illuminating a button 201 prompts the user 300 to press that button 201 to enact a corresponding change to a playback setting of the media playback device 100. The illumination of one or more of the buttons 201 thereby serves several purposes: first, the user 300 is informed that the current value of a playback setting is not optimal and a change is desirable; secondly, the user 300 is given guidance on how to enact this change using the remote control device 200; and thirdly, the user 300 is informed of the location of the button 201a.

There are various manners in which it can be determined that a current value of a playback setting of the media playback device 100 is not optimal and therefore the user should be prompted to change it. Examples are given below.

In a first example, the media playback device processor 101 of the media playback device 100 identifies that a current value of a playback setting is not optimal. The media playback device processor 101 then sends an indication of the identified playback setting to the remote control device 200 via the communications interface 102. In other words, the media playback device 100 identifies a playback setting for which the current value is not optimal, and informs the remote control device 200 of the identified playback setting.

To do so, the media playback device processor 101 may compare a current value of the playback setting with one or more threshold values for that playback setting. The threshold value(s) may be stored in a computer storage device, e.g. at the media playback device 100, which is accessible by the media playback device processor 101.

A threshold value may be a lower threshold value. This may be for example a minimum brightness setting, a minimum volume setting, etc. In this case, the media playback device processor 101 may determine that a given playback setting is not optimal if the current value for the playback setting is below the threshold value.

A threshold value may be an upper threshold value. This may be for example a maximum volume setting. In this case the media playback device processor 101 may determine that a given playback setting is not optimal if the current value for the playback setting is above the threshold value.

There may be more than one threshold value associated with a given playback setting. For example, the volume setting may be configured with a lower threshold (e.g. 30/100) and an upper threshold (e.g. 80/100). The media playback device processor 101 may then determine that the volume setting should be changed if the current value of the volume setting is below 30/100 or above 80/100.

Moreover, different thresholds may be applied depending on for example the time of day, the nature of the media being played back, etc. For example, if a television set is switched on during the daytime, a relatively high threshold for the volume may be set (the volume setting being considered not optimal if it is below this threshold). On the other hand, if a television set is switched on during night-time, a relatively low threshold for the volume may be set. In this way, the user 300 is alerted to the volume being high at night-time by virtue of the volume-down button on the remote control device 200 being illuminated accordingly and is therefore prompted to use the volume-down button to reduce the playback volume. As another example, a high threshold for the brightness level may be set for daytime (when ambient light is bright) whereas a lower threshold for the brightness level may be set for night-time. As another example, if the media is a film/movie, a higher playback volume may be appropriate and so the volume threshold may be set relatively high, whereas for news or a documentary, etc. the volume threshold may be set relatively low.

Other types of playback setting may not be associated with threshold values. An example is the aspect ratio setting. In such cases, the media playback device processor 101 may be configured to identify the playback setting to be changed by identifying that the current value of the playback setting is not equal to a target value of that playback setting. For example, the target aspect ratio setting may be an aspect ratio for the video portion of the media content that is specified in or with the media content itself. If the current aspect ratio setting of the media playback device 100 is not equal to the target value, the media playback device processor 101 sends an indication of the aspect ratio playback setting to the remote control device 200. The remote control device 200, as described above, receives this indication and illuminates a corresponding one or more buttons 201 to prompt the user 300 to alter the aspect ratio setting of the media playback device 100 using the remote control device 200.

In a second example, the media playback device 100 sends the current value of the playback setting to the remote control device 200 and the remote control device processor 203 determines whether the current value is not optimal. This may comprise the media playback device 100 sending a plurality of current values of a respective plurality of playback settings to the remote control device 200. In this sense, the task of identifying that one (or more) of the playback settings should be changed is performed by the remote control device processor 203 (instead of the media playback device processor 101, as described above).

To do so, the remote control device processor 203 may compare the received current value of the playback setting with one or more threshold values for that playback setting. The threshold value(s) may be stored in a computer storage device, e.g. at the remote control device 200, which is accessible by the remote control device processor 203.

A threshold value may be a lower threshold value, such as a minimum brightness setting, a minimum volume setting, etc. In this case, the remote control device processor 203 may determine that a given playback setting is not optimal if the current value for the playback setting is below the threshold value.

A threshold value may be an upper threshold value, such as a maximum brightness setting, a maximum volume setting, etc. In this case the remote control device processor 203 may determine that a given playback setting is not optimal if the current value for the playback setting is above the threshold value.

There may be more than one threshold value associated with a given playback setting. For example, the volume setting may be configured with a lower threshold (e.g. 30/100) and an upper threshold (e.g. 80/100). The remote control device processor 203 may then determine that the volume setting should be changed if the current value of the volume setting is below 30/100 or above 80/100.

Again, different thresholds may be applied depending on for example the time of day, the nature of the media being played back, etc. as described above for the first example.

Other types of playback setting may not be associated with threshold values. An example is the aspect ratio setting. In such cases, the remote control device processor 203 may be configured to identify the playback setting to be changed by identifying that the received current value of the playback setting is not equal to a target value of that playback setting. For example, the target aspect ratio setting may be an aspect ratio for the video portion of the media content that is specified in or with the media content itself and passed to the remote control device 200 by the media playback device 100. If the received current aspect ratio setting of the media playback device 100 is not equal to the target value, the remote control device processor 203 illuminates a corresponding one or more buttons 201 to prompt the user 300 to alter the aspect ratio setting of the media playback device 100 using the remote control device 200.

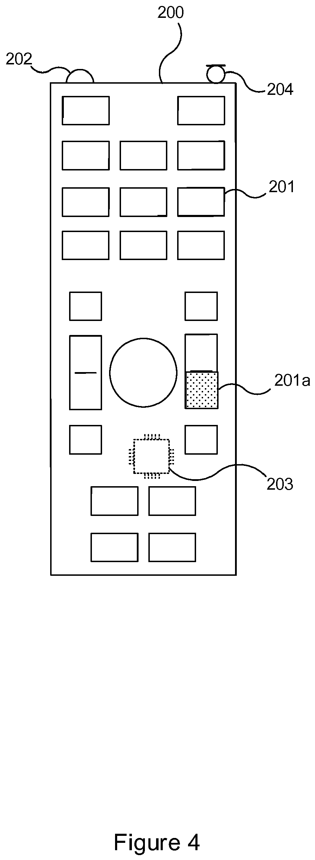

With reference to Figure 4, in a third example the remote control device 200 receives input from a sensor arrangement 204 indicative of the current value of the playback setting and uses the indication of the current value to determine that a corresponding playback setting should be changed. The sensor arrangement 204 may be provided integrally with the remote control device 200, as shown in Figure 4, or the sensor arrangement 204 may be a standalone sensor arrangement external to and in communication with the remote control device 200.

The sensor arrangement 204 may be or include a microphone for detecting a loudness of the audio portion of the media content as output by the speaker 103 of the media playback device 100. The sensor arrangement 204 may be or include a light detector for detecting a brightness of the video portion of the media content as displayed on the display screen 104 of the media playback device 100.

The sensor arrangement 204 is constructed and arranged to detect a physical property of the media content (e.g. loudness of the audio portion, brightness of the video portion). Note that this is not the same as determining the current playback setting of the media device 100 itself (e.g. a volume setting, brightness setting). However, the playback settings of the media device 100 affect the corresponding physical properties of the media content. Therefore, the remote control device processor 203 can still use the input from the sensor arrangement 204 to determine one or more playback settings of the media playback device 100 which should be changed because they are not optimal.

To do so, the remote control device processor 203 may compare the sensed value of the physical property with one or more threshold values for that physical property. The threshold value(s) may be stored in a computer storage device, e.g. at the remote control device 200, which is accessible by the remote control device processor 203.

A threshold value may be a lower threshold value, such as a minimum brightness, volume, etc. In this case, the remote control device processor 203 may determine that a given playback setting is not optimal if the sensed value of a physical property corresponding to that playback setting is below the threshold value. E.g. if the brightness sensed by the sensor arrangement 204 is below the threshold brightness, the remote control device processor 203 may determine that the brightness setting should be increased. The remote control device processor 203 may then illuminate the relevant button 201 which is for causing the brightness setting to increase.

A threshold value may be an upper threshold value, such as a maximum brightness, volume, etc. In this case the remote control device processor 203 may determine that a given playback setting is not optimal if the sensed value of a physical property corresponding to that playback setting is above the threshold value. For example, if the loudness sensed by the sensor arrangement 204 is above a threshold loudness, the remote control device processor 203 may determine that the volume setting should be decreased. The remote control device processor 203 may then illuminate the relevant button 201 which is for causing the volume setting to decrease.

There may be more than one threshold value associated with a given physical property. For example, the loudness may be configured with a lower threshold (e.g. 50dB) and an upper threshold (e.g. 90dB). The remote control device processor 203 may then determine that the volume setting should be changed if the current value of the loudness, as sensed by the sensor arrangement 204, is below 50dB or above 90dB.

In yet other examples, a combination of the approaches used in the first to third example described above may be used. As just one example to illustrate this, the remote control device 200 may have its own microphone to determine the actual loudness of audio that is being played back and illuminate a volume-up or volume-down button on the remote control device 200 accordingly. This reflects the fact that for example a high volume can be disturbing for others, and can easily be detected at the remote control device 200. On the other hand, the remote control device 200 may rely on the media playback device 100 to inform the remote control device 200 if the brightness or contrast level is high or low and needs adjusting.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating a remote control device for controlling a media playback device, the remote control device comprising a plurality of buttons for causing control signals to be sent by the remote control device to the media playback device to modify playback settings of the media playback device, the method comprising:
illuminating at least one of the buttons, said at least one button being for causing a control signal to be sent by the remote control device to the media playback device to modify a playback setting, thereby to prompt a user of the remote control device to operate said at least one button to change the playback setting on the media playback device.

2. A method according to claim 1, comprising identifying the playback setting to be changed by receiving from the media playback device an indication of the playback setting to be changed.

3. A method according to claim 1 or claim 2, comprising identifying the playback setting to be changed by:
receiving input from a sensor arrangement indicative of a current value of the playback setting; and
identifying that the current value of the playback setting is to be changed.

4. A method according to any of claims 1 to 3, comprising identifying the playback setting to be changed by:
receiving from the media playback device a current value of the playback setting; and
identifying that the current value of the playback setting is to be changed.

5. A method according to claim 3 or claim 4, comprising identifying that the current value of the playback setting is to be changed by comparing the current value of the playback setting with a threshold value of the playback setting.

6. A method according to claim 5, comprising identifying that the current value of the playback setting is to be changed by identifying that the current value of the playback setting is below the threshold value.

7. A method according to claim 5, comprising identifying that the current value of the playback setting is to be changed by identifying that the current value of the playback setting is above the threshold value.

8. A method according to any of claims 1 to 7, comprising illuminating at least one of the buttons by flashing said at least one of the buttons.

9. A remote control device for controlling a media playback device, the remote control device comprising:
a plurality of buttons for causing control signals to be sent by the remote control device to the media playback device to modify playback settings of the media playback device; and
a processor configured to illuminate at least one of the buttons, said at least one button being for causing a control signal to be sent by the remote control device to the media playback device to modify a playback setting, thereby to prompt a user of the remote control device to operate said at least one button to change the identified playback setting on the media playback device.

10. A method of operating a media playback device controllable by a remote control device comprising a plurality of buttons for causing control signals to be sent by the remote control device to the media playback device to modify playback settings of the media playback device, the method comprising:
causing at least one of the buttons of the remote control device to illuminate, said at least one button being for causing a control signal to be sent by the remote control device to the media playback device to modify a playback setting, thereby to prompt a user of the remote control device to operate said at least one button to change the identified playback setting on the media playback device.

11. A method according to claim 10, comprising identifying the playback setting to be changed and outputting an indication of the playback setting to be changed for reception by the remote control device.

12. A method according to claim 11 or claim 12, comprising identifying the playback setting to be changed by comparing a current value of the playback setting with a threshold value of the playback setting.

13. A method according to any of claims 10 to 12, comprising causing at least one of the buttons of the remote control device to illuminate by outputting an indication of a current value of the playback setting for reception by the remote control device.

14. A media playback device controllable by a remote control device comprising a plurality of buttons for causing control signals to be sent by the remote control device to the media playback device to modify playback settings of the media playback device, the media playback device comprising:
a processor configured to cause at least one of the buttons of the remote control device to illuminate, said at least one button being for causing a control signal to be sent by the remote control device to the media playback device to modify a playback setting, and thereby prompt a user of the remote control device to operate said at least one button to change the identified playback setting on the media playback device.
